**Europäisches Patentamt**

**European Patent Office**

**Office européen des brevets**

(11) Veröffentlichungsnummer : **0 328 993 B1**

(12)

# EUROPÄISCHE PATENTSCHRIFT

(45) Veröffentlichungstag der Patentschrift :
**26.08.92 Patentblatt 92/35**

(51) Int. Cl.$^5$ : **E21B 43/08, B01D 19/00**

(21) Anmeldenummer : **89102077.8**

(22) Anmeldetag : **07.02.89**

(54) Anordnung zum Austreiben leichtflüchtiger Verunreinigungen aus dem Grundwasser.

(30) Priorität : **19.02.88 DE 3805200**
**11.04.88 DE 3811962**

(43) Veröffentlichungstag der Anmeldung :
**23.08.89 Patentblatt 89/34**

(45) Bekanntmachung des Hinweises auf die
Patenterteilung :
**26.08.92 Patentblatt 92/35**

(84) Benannte Vertragsstaaten :
**AT CH DE ES FR GB IT LI NL SE**

(56) Entgegenhaltungen :
**EP-A- 0 062 716**
**DE-A- 3 625 488**
**DE-U- 8 620 021**
**US-A- 4 014 387**

(73) Patentinhaber : **IEG Industrie-Engineering**
**GmbH**
**Lilienthalstrasse 6**
**W-7410 Reutlingen 11-Betzingen (DE)**

(72) Erfinder : **Bernhardt, Bruno,**
**Goerdelerstrasse 2 W 113,**
**W-7410 Reutlingen 11-Betzingen, (DE)**
Erfinder : **Hessner, Anton,**
**Eckener Strasse 15,**
**W-7410 Reutlingen, (DE)**
Erfinder : **Krug, Rainer,**
**Burgweg 19,**
**W-7416 Trochtelfingen, (DE)**

(74) Vertreter : **Möbus, Rudolf, Dipl.-Ing.**
**Hindenburgstrasse 65**
**W-7410 Reutlingen (DE)**

EP 0 328 993 B1

Jouve, 18, rue Saint-Denis, 75001 PARIS

EP 0 328 993 B1

## Beschreibung

Die Erfindung betrifft eine Anordnung zum Austreiben leichtflüchtiger Verunreinigungen aus dem Grundwasser und dem von ihm durchströmten Erdreich durch Erzeugung von Unterdruck in einem bis in den Bereich des verunreinigten Grundwassers getriebenen Brunnenschacht und Zuleitung eines Gases, insbesondere von Frischluft unterhalb des Wasserspiegels im Brunnenschacht.

Eine Anordnung der eingangs genannten Art ist bereits vorgeschlagen worden (DE-OS 36 25 488). In Gegensatz zu den herkömmlichen Verfahren, mit erheblichem Energieaufwand Druckluft in das einen Brunnenschacht umgebende Erdreich und/oder in das im Brunnenschacht angesammelte Grundwasser einzupressen, wird bei dieser Anordnung Luft allein unter der Wirkung des im wasserfreien Bereich des Brunnenschachtes gebildeten Unterdruckes oder allenfalls mit ganz geringem Überdruck eingeleitet. Dabei hat sich gezeigt, daß hierbei mit relativ geringem Unterdruck überraschend große Mengen an leichtflüchtigen Verunreinigungen in gasförmigem Zustand abgesaugt werden können und ein beachtlich größerer Wirkungsgrad erzielt wird, als bei den erwähnten herkömmlichen Verfahren. Bei den herkömmlichen Verfahren werden durch die angewandten hohen Drücke Laminarströmungen abgerissen und Wirbel gebildet, welche den Wirkungsgrad der Anlagen erheblich vermindern. Außerdem werden beim Einpressen von Druckluft in das Erdreich oder beim Abpumpen von Grundwasser die Verunreinigungen, die sich erfahrungsgemäß ungleichmäßig im Erdreich verteilen, auch zwangsläufig in nicht verseuchte Bereiche getrieben oder gezogen.

Der Erfindung liegt die Aufgabe zugrunde, die eingangs genannte, bereits vorgeschlagene Anordnung dahingehend zu verbessern, daß die Flüssigkeitsströmung in dem kontaminierten, den getriebenen Brunnenschacht umgebenden Erdreich im Sinne einer Erhöhung des Wirkungsgrades des Austreibens der Verunreinigungen begünstigt wird.

Die gestellte Aufgabe wird mit einer Anordnung der eingangs genannten Art erfindungsgemäß dadurch gelöst, daß die Begrenzungswandung des Brunnenschachtes mindestens in dem zwischen der Lufteingabestelle und dem Wasserspiegel befindlichen Bereich mit feineren, eine laminare Flüssigkeitsströmung relativ großer Geschwindigkeit begünstigenden Kapillaröffnungen und einer größeren freien Durchlaßfläche als die übrige Brunnenschachtwandung ausgebildet ist.

Mit den vorstehend genannten Merkmalen wird im luftdurchströmten Flüssigkeitsbereich des Brunnenschachtes erreicht, daß das dort durch den Luftdurchsatz von den leichtflüchtigen Verunreinigungen ganz oder weitgehend befreite und gleichzeitig mit Sauerstoff angereicherte Grundwasser in erhöhtem Maße durch die feinen Kapillaren der Brunnenschachtwandung in das umgebende Erdreich ausströmt. Die vom Düsenkörper aufsteigende Luft bringt die oberhalb des Düsenkörpers befindliche Wassersäule in Bewegung. Der hierbei erzeugte impulsartig schwankende hydraulische Druck reicht aus, um einen Teil des dort durch den Luftdurchsatz von den leichtflüchtigen Verunreinigungen ganz oder weitgehend befreiten und gleichzeitig mit Sauerstoff angereicherten Grundwassers durch die feinkapillare Wandung des Brunnenschachtes in das umgebende Erdreich auszutreiben und in der Umgebung des Brunnenschachtes eine Ringströmung mit verstärktem Grundwasserzufluß in den Bodenbereich des Brunnenschachtes zu begünstigen. Das zum Ausströmen im grundwasserspiegelnahen Bereich gezwungene gereinigte Grundwasser übt durch seine natürliche Schwerkraft einen Vertikaldruck auf die darunterliegenden Grundwasserschichten aus und regt dadurch die vorstehend erwähnte Grundwasserbewegung an.

Es hat sich gezeigt, daß sich dieses mit Luft angereicherte Grundwasser über einen beachtlichen Umgebungsradius, der durch die Höhe des im Brunnenschacht erzeugten Unterdruckes beeinflußt werden kann, in der Nähe des Grundwasserspiegels im Erdreich vom Brunnenschacht wegbewegt, ehe es nach unten in tiefere Grundwasserschichten absinkt und dabei eine sich in der Umgebung des Brunnenschachtes ausbildende Ringströmung mit verstärktem Grundwasserzufluß in den Bodenbereich des Brunnenschachtes begünstigt. Das zum verstärkten Ausströmen im grundwasserspiegelnahen Bereich gezwungene gereinigte Grundwasser übt durch seine natürliche Schwerkraft einen Vertikaldruck auf die darunterliegenden Grundwasserschichten aus und regt dadurch die vorstehend erwähnte kreisförmige Grundwasserbewegung um den Brunnenschacht herum unter Verstärkung des Grundwasserzuflusses in den bodennahen Bereich des Brunnenschachtes an. Gleichzeitig wird dadurch auch die erwünschte Vertikalströmung des Grundwassers aus dem unteren Bereich des Brunnenschachtes in dessen oberen Reinigungsbereich unterstützt. Die Bewegung des aus dem grundwasserspiegelnahen Brunnenbereich zunächst horizontal ausströmenden, gereinigten und mit Sauerstoff angereicherten Grundwassers nach unten zum Durchspülen der Bodenschichten, die eine unterschiedliche Dichte aufweisen können, wird besonders begünstigt, wenn auch im Bodenbereich des Brunnenschachtes die Wandung filterartig wie oben ausgebildet und der übrige Wandungsbereich wasserundurchlässig gehalten wird. Der ganze Vorgang erfolgt ohne großes Druckgefälle und damit ohne Störung eines Laminarflusses des Grundwassers. Praktische Versuche haben ergeben, daß eine Reinigung des verunreinigten Grundwasserbereiches mit dem der Anordnung gemäß der Erfindung zugrundeliegenden Reinigungsverfahren in kurzer

2

Zeit erfolgt. Die erwähnte vorteilhafte Wirkung konnte durch Druck- und Strömungsmessungen im Brunnenschacht und dem ihn weitreichend umgebenden Erdreich bestätigt werden.

Ein wesentlicher Vorteil ist darin zu sehen, daß mit diesem Verfahren die Verunreinigungen nur in denjenigen grundwasserversetzten Erdreichbereichen transportiert werden, in denen sie sich ohnehin angereichert oder verteilt hätten, und nicht in benachbarte, nicht verunreinigte Erdreichbereiche getrieben werden. Bei den vorhandenen Niederdruckverhältnissen wird verhindert, daß ein größerer Anteil des von der eingeführten Luft durchzogenen Grundwassers in Wassernebel oder Wasserdampf verwandelt und durch dem Unterdruckerzeuger abgezogen wird und den Wirkungsgrad einer nachgeschalteten Filtervorrichtung vermindert.

Die Anordnung gemäß der Erfindung und das ihr zugrundeliegende Verfahren begünstigt auch eine biologische Reinigung des kontaminierten Erdreichs. Mit der Frischluft können aerobe Mikroben eingegeben werden, die mit dem durch die Kapillaren ausströmenden Grundwasser ins Erdreich ausgetragen werden und dort das Cracken von Kohlewasserstoffmolekülen begünstigten.

Vorteilhafterweise kann die Wandungsbewehrung des Brunnenschachtes in dem luftdurchströmten Grundwasserbereich zwischen Lufteingabestelle und Wasserspiegel aus zwei konzentrisch und mit Anstand voneinander angeordneten Siebwandungen bestehen, die durch Stützstege oder Siebwandungsteile gegeneinander abgestützt sind und deren Zwischenraum mit einem feine Kapillardurchgänge ergebenden Granulat ausgefüllt ist. Die Wandungsbewehrung der anderen Brunnenschachtbereiche kann aus bekannten Brunnenrohren mit Schlitzbrückenlochung bestehen oder aber auch ohne Öffnungen sein.

Durch die Unterdruckbildung im grundwasserfreien oberen Bereich des Brunnenschachtes werden natürlich auch Gase aus dem grundwasserfreien Erdreich in den Brunnenschacht eingezogen. Bei stark porösen Böden kann dieser Anteil so hoch werden, daß er die Unterdruckwirkung auf den Grundwasserspiegel zu stark beeinträchtigt. Für diesen Fall kann die Anordnung zweckmäßig eine schlauchbalgförmige Folienwandung aufweisen, welche im grundwasserfreien Brunnenschachtbereich das Ansaugen von Gasen verhindert, wobei die Folienwandung mit ihrem inneren Ende an einem Schwimmer verankert sein kann, der auch als Träger für eine mit Abstand vom Wasserspiegel angeordnete und zur Verteilung der zugeleiteten Frischluft im Grundwasser des Brunnenschachtes dienende Siebwandung vorgesehen ist.

Zur zusätzlichen Begünstigung einer Grundwasser-Vertikalströmung im Brunnenschacht kann am Düsenkörper mindestens ein seine obere Begrenzungswandung durchdringender und nach unten über die vom Düsenkörper begrenzte Luftkammer hinausragender Düsenschacht angeordnet sein, der im Bereich der Luftkammer mit Lufteintrittsöffnungen in seiner Wandung versehen ist. Vorzugsweise können mehrere solcher und zweckmäßig aus Rohrabschnitten bestehende Düsenschächte in gleichmäßiger Umfangsverteilung im Düsenkörper angeordnet sein, dem zur Erzielung einer gleichmäßigen Luftverteilung über seine mit Düsenöffnungen versehene obere Begrenzungswandung und auf die mehreren Düsenschächte die Frischluft über eine zentrale Öffnung zugeführt werden kann. Die Düsenschächte bilden Aufsteigkanäle für das Grundwasser, die durch die sich im Düsenkörper ausbildende Luftkammer hindurchführen und in stärkerem Maße Grundwasser von unterhalb des Düsenkörpers in die oberhalb des Düsenkörpers befindliche Wasserreinigungszone gelangen lassen. Im Bereich der Luftkammer des Düsenkörpers dringt Frischluft durch die Lufteintrittsöffnungen in die Düsenschächte ein und ergibt beim Hochsteigen in den Düsenschächten eine Sogwirkung, die Grundwasser in das untere Ende der Düsenschächte ansaugt.

Neben dem Vorteil der Bildung von Grundwasserdurchlässen durch den Düsenkörper hindurch erlaubt die Anordnung von Düsenschächten auch, Grundwasser aus bestimmten Tiefenbereichen des Brunnenschachtes in die Reinigungszone hochzubringen, indem die Düsenschächte mit entsprechender Länge ausgebildet werden. Hierzu können die Düsenschächte vorteilhafterweise im Bereich ihrer unteren Enden zum Ansetzen von Verlängerungsschächten ausgebildet sein.

An den Düsenschächten können im Bedarfsfalle auch den Brunnenschacht abteilende Zwischenwandungen befestigt werden, wenn ein unterer Brunnenschachtbereich z. B. gegen gespanntes Grundwasser abgedichtet werden soll. Dies ist besonders vorteilhaft in Anwendungsfällen, wo aus größeren Tiefen stammendes Heil- oder Mineralwasser einer Reinigung durch Begasung unterzogen werden soll. Auch läßt sich durch solche Zwischenwandungen verhindern, daß bei einem Brunnenschacht, der über einen kontaminierten Bodenbereich hinaus nach unten gebohrt worden ist, aus dem oberen Brunnenschachtbereich verunreinigtes Grundwasser im Brunnenschacht nach unten in nicht verunreinigte Bodenbereiche absinken kann.

Nachfolgend werden Anordnungen gemäß der Erfindung anhand der Beiliegenden Zeichnung näher erläutert:

Im einzelnen zeigen:

Fig. 1 eine schematische Übersichtsdarstellung einer Anordnung;

Fig. 2 eine vergrößerte Darstellung des in Fig. 1 bezeichneten Bereiches II des Brunnenschachtes mit der dortigen Begrenzungswandung;

Fig. 3 einen Schnitt entlang der Linie III - III in Fig. 2;

Fig. 4 eine der Fig. 1 entsprechende Darstellung mit näheren Einzelheiten;

Fig. 5 eine der Fig. 4 entsprechende Darstellung einer abgewandelten Anordnung;

Fig. 6 eine gegenüber Fig. 1 vergrößerte Darstellung eines Brunnenschachtbereiches mit einem Düsenkörper mit Düsenschächten;

Fig. 7 eine der Fig. 6 entsprechende Darstellung von einer zweiten Ausführungsform der Anordnung mit Düsenschächten am Düsenkörper.

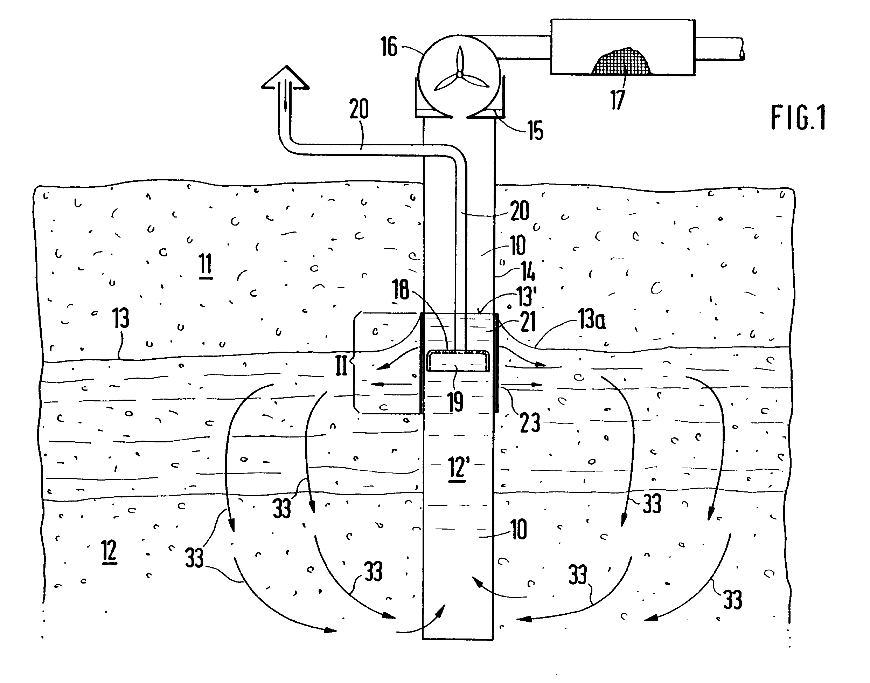

Die schematische Fig. 1 zeigt einen Brunnenschacht 10, der in ein durch Chlorkohlenwasserstoffe verseuchtes Erdreich 11 bis in den Grundwasserbereich 12 getrieben worden ist. Der Grundwasserspiegel ist durch eine Linie 13 angedeutet. Die Wandung des Brunnenschachtes ist mit bekannten durchbrochenen Brunnenrohren 14 armiert. Das obere Ende des Brunnenschachtes ist durch einen Deckel 15 luftdicht verschlossen, auf welchen zur Unterdruckerzeugung im Brunnenschacht ein Ventilator 16 aufgesetzt ist. Die vom Ventilator 16 aus dem Brunnenschacht 10 abgesaugte Luft wird über ein Filter 17 ins Freie geleitet. Durch die Unterdruckbildung im Brunnenschacht 10 wird im Brunnenschacht und dem anschließenden Erdreichbereich der Grundwasserspiegel entsprechend dem Linienbereich 13a angehoben. Der Grundwasserspiegel im Brunnenschacht 10 ist mit 13′ bezeichnet.

Im Innern des Brunnenschachtes 10 ist im Grundwasser 12′ mit Abstand unterhalb des Grundwasserspiegels 13′ eine glockenförmige Siebplatte 18 angeordnet. In den Innenraum 19 dieser Glocke führt durch den Brunnenschacht 10 hindurch eine Luftleitung 20, durch welche von außen Frischluft nachgezogen wird, die durch die Sieböffnungen der Siebglocke 18 in einzelnen Luftbläschen zum Flüssigkeitsspiegel 13′ aufsteigt und in diesem Reinigungsbereich 21 des Brunnenschachtes die im Grundwasser 12′ enthaltenen leichtflüchtigen Stoffe aufnimmt und mit austrägt.

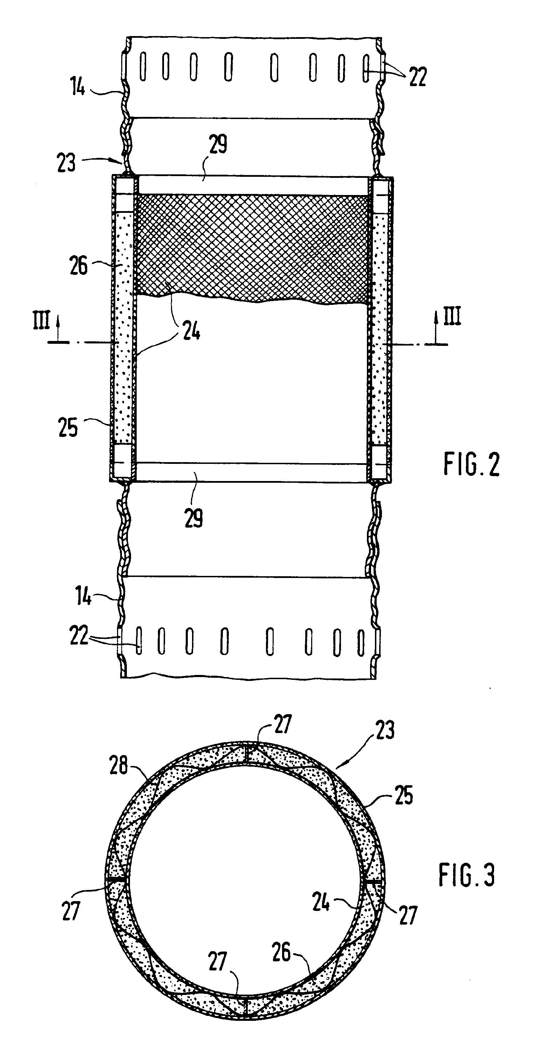

In dem in Fig. 1 mit II bezeichneten Bereich ist die Wandung des Brunnenschachtes 10 abweichend gestaltet und nicht mit den üblichen geschlitzten Brunnenrohren versehen. Die Fig. 2 und 3 zeigen diesen Wandungsbereich, in welchem zwischen die bekannten und mit einer Schlitzbrückenlochung 22 versehenen Brunnenrohre ein Filterrohr 23 eingefügt ist. Das Filterrohr 23 weist eine innere Siebwandung 24 und eine äußere Siebwandung 25 auf, die konzentrisch zueinander mit Abstand angeordnet sind, aus Metall oder Kunststoff bestehen können und einen größeren Durchlaßquerschnitt als die angrenzenden Brunnenrohre 14 erbringen. Der zwischen den beiden Siebwandungen 24 und 25 bestehende Zwischenraum ist mit einem Granulat 26 ausgefüllt. Gemäß der Querschnittsdarstellung der Fig. 3 sind die beiden Siebwandungen 24 und 25 durch radial gerichtete Stege 27 und durch eine mäanderförmig verlaufende innere Siebwandung 28 gegeneinander abgestützt und sowohl an ihrem oberen als auch an ihrem unteren Ende durch Begrenzungsringe 29 versteift. Das Granulat ergibt eine Vielzahl von feinen Kapillardurchgängen, durch welche das Grundwasser in einer Laminarströmung mit relativ großer Strömungsgeschwindigkeit fließen kann.

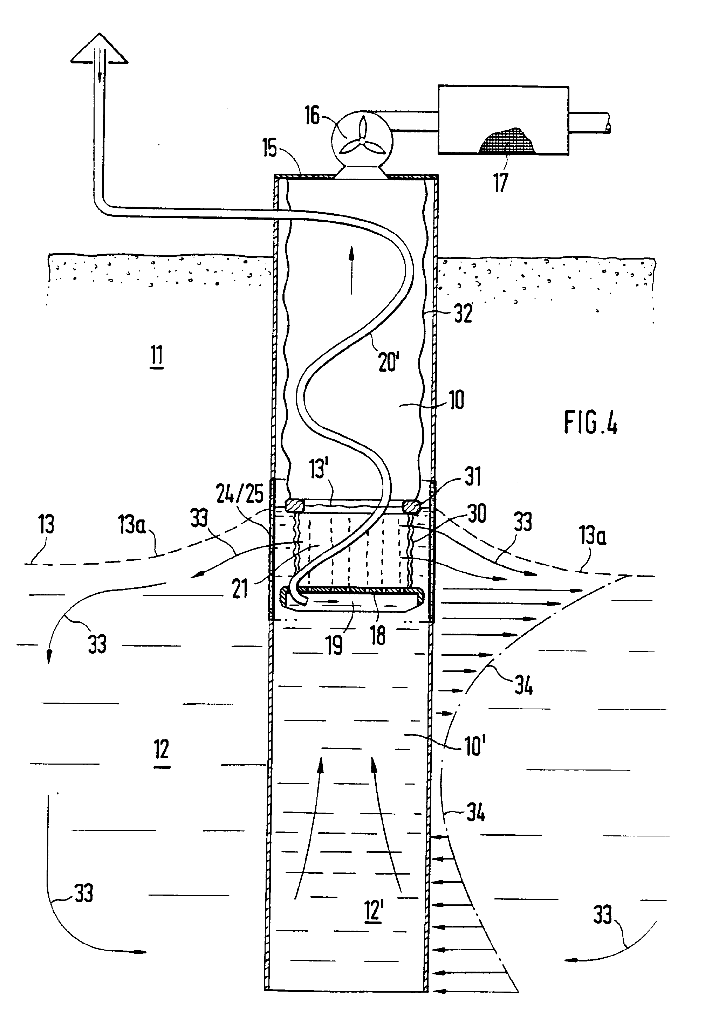

Fig. 4 zeigt eine bevorzugte Ausführungsform der Anordnung, bei welcher die glockenförmige Siebplatte 18 mit Ketten 30 an einem Schwimmerring 31 hängt. Die Luftleitung 20′ besteht aus einem flexiblen Schlauch. Zwischen dem den Brunnenschacht 10 verschließenden Deckel 15 und dem Schwimmerring 31 ist eine schlauchbalgförmige Folienwandung 32 befestigt, die das Eindringen von Gasen aus dem oberhalb des Grundwasserspiegels 13 befindlichen Erdreich 11 in den Brunnenschacht 10 verhindert. In dem Reinigungsbereich 21 zwischen der Siebplatte 18 und dem Flüssigkeitsspiegel 13′ des Brunnenschachtes 10 sind die aufsteigenden Frischluftbläschen als Perlenketten angedeutet. Durch diese aufsteigenden Luftbläschen wird das im Reinigungsbereich 21 befindliche Grundwasser in Schwingungen versetzt, nach oben mitbewegt und dann entland der Wandung nach unten zurückbewegt, wobei ein großer Teil durch die Siebwandungen 24, 25 nach außen strömt. Die Schwingungen begünstigen den seitlichen Austritt des Grundwassers durch die Kapillaröffnungen der Siebwandungen 24 und 25. Es bildet sich in der Umgebung des Brunnenschachtes 10 eine auch in Fig. 1 durch Pfeile 33 angezeigte Ringströmung des Grundwassers aus. Die Ausweitung dieser Ringströmung in der Umgebung des Brunnenschachtes 10 läßt sich durch die Stärke des im grundwasserfreien Brunnenschacht ausgebildeten Unterdruckes beeinflussen. Im oberen Drittel des Grundwasser 12′ führenden Brunnenschachtbereiches 10′ überwiegt das Ausströmen von Grundwasser, das im Bereich der Siebwandungen 24, 25 besonders stark ist. In der unteren Hälfte des Grundwasser 12′ führenden Brunnenschachtbereiches 10′ überwiegt dagegen der Zufluß von Grundwasser in den Brunnenschacht. Dies ist in Fig. 4 durch eine strichpunktiert eingetragene Druckverteilungskurve 34 aufgezeigt. Aufgrund dieser Ringströmungsbildung wird auch im Innern des Brunnenschachtes 10 ein Hochströmen des Grundwassers 12′ aus dem unteren Brunnenschachtbereich ausgelöst.

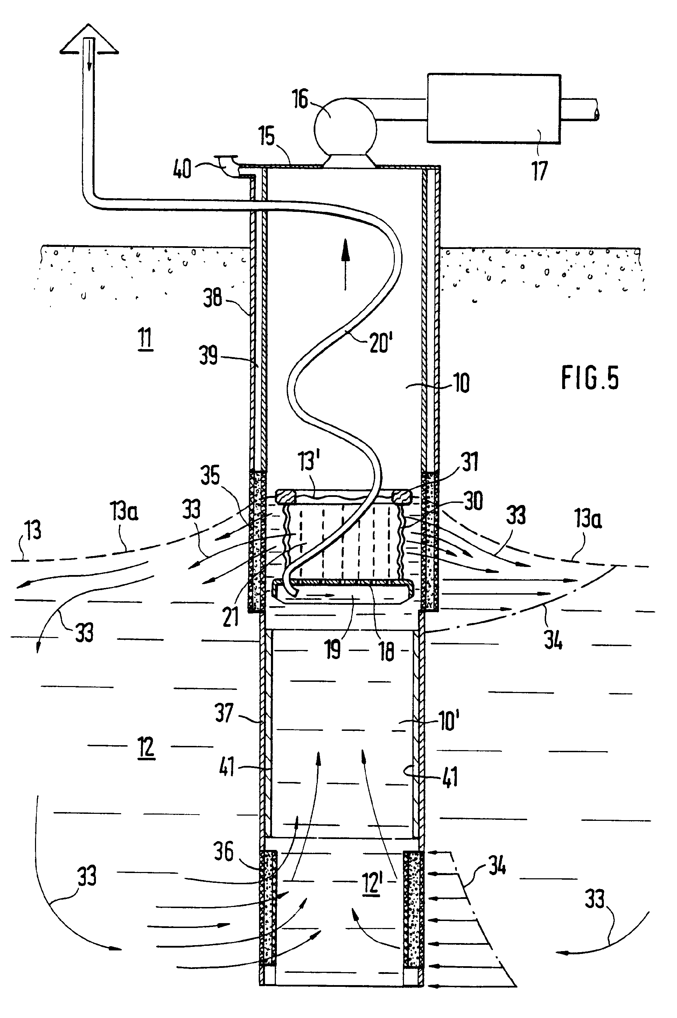

Fig. 5 zeigt eine abgewandelte Ausführungsform der Anordnung, bei welcher der Brunnenschacht 10 bis auf einen Siebwandungsbereich 35, der dem Siebwandungsbereich 24/25 der vorher beschriebenen Ausführungsform entspricht, und auf einen unteren Siebwandungsbereich 36 mit wasserundurchlässigen Rohren 37 ausgekleidet ist. Im grundwasserfreien Bereich bis zum oberen Siebwandungsbereich 35 sind es doppelwandige wasserundurchlässige Rohre 38. Bei dieser Anordnung kann ein Einlauf und Rücklauf von Grundwasser

EP 0 328 993 B1

nur durch den unteren Siebwandungsbereich 36 erfolgen, wodurch der Grundwasserkreislauf in der Umgebung des Brunnenschachtes 10 noch verstärkt wird. Die Anordnung ist zur Anordnung einer biologischen Reinigung des kontaminierten Erdreichs ausgebildet, wobei in den Ringraum 39 der doppelwandigen Rohre 38 über einen oberen Einlaß 40 mit Mikroben versetzte wässrige Nährlösung eingegeben werden kann, die bis in den Siebwandungsbereich 35 abfließt und dort von dem durch den Siebwandungsbereich 35 nach außen tretenden gereinigten und mit Sauerstoff angereicherten Grundwasser in das umgebende Erdreich mitgenommen wird. Um den biologischen Reinigungseffekt zu erhöhen, ist bei der Anordnung nach Fig. 5 die Innenseite der wasserundurchlässigen Wandungsrohre 37 mit einem elektrischen Heizkörperbelag 41 zum Aufheizen des im Brunnenschacht 10 befindlichen Grundwassers auf eine für das Wachstum der Mikroben günstige Temperatur versehen.

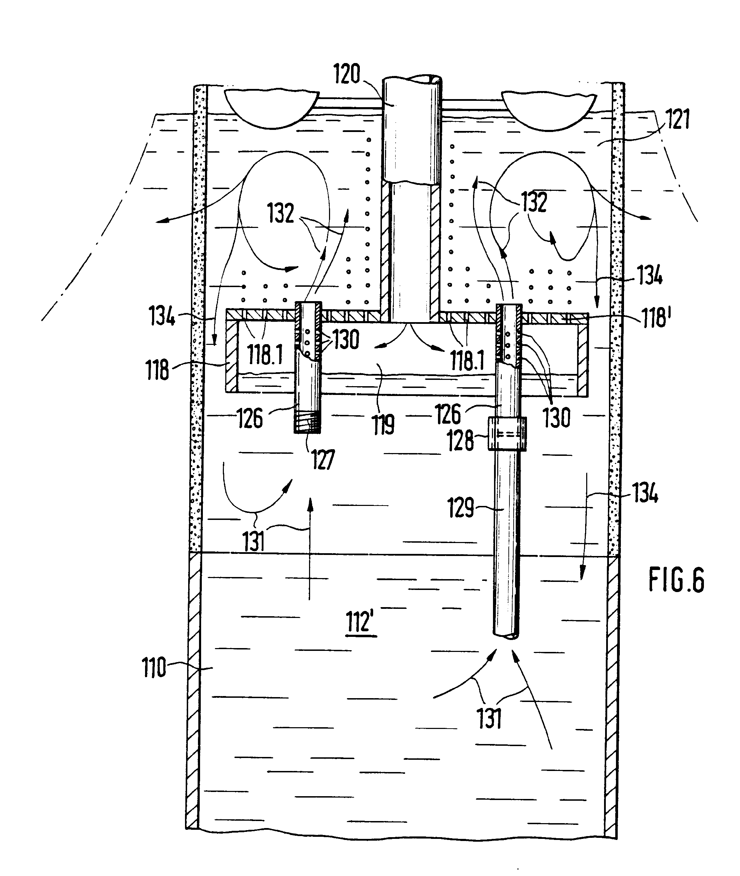

Fig. 6 zeigt eine Ausführungsform der Anordnung, bei welcher in der oberen Begrenzungswandung 118′ des Düsenkörpers 118 in gleichmäßiger Verteilung und in gleichem Abstand von dem zentralen Luftzuführungsrohr 120 in Längsrichtung des Brunnenschachtes 110 verlaufende Düsenrohre 126 eingesetzt sind. Diese Düsenrohre enden oberhalb der Begrenzungswandung 118′, führen durch die sich im Düsenkörper 118 ausbildende Luftkammer 119 hindurch und enden unterhalb dieser Luftkammer 119 im mit Grundwasser 112′ gefüllten Brunnenschacht 110. Sie sind im Bereich ihres unteren Endes mit einem Außengewinde 127 versehen, so daß mittels Schraubmuffen 128 Verlängerungsrohre 129 angesetzt werden können. Unterhalb der als Düsenplatte ausgebildeten oberen Begrenzungswandung 118′ des Düsenkörpers 118 im Bereich der Luftkammer 119 ist die Wandung der Düsenrohre 126 mit Lufteintrittsöffnungen 130 versehen. Durch die Lufteintrittsöffnungen 130 aus der Luftkammer 119 in die Düsenrohre 126 einströmende Luft erzeugt einen Sog, durch welchen Grundwasser 112′ angesaugt wird, wie durch Pfeile 131 angedeutet ist, und in den Reinigungsbereich 121 durch den Luftkammerbereich 119 hindurch hochgefördert wird. Durch die Düsenrohre 126 entwickelt sich im Reinigungsbereich 121 des Brunnenschachtes 110 eine durch Pfeile 132 angedeutete verstärkte Umlaufbewegung des Grundwassers, von dem ein Teil in Richtung der Pfeile 125 durch die Filterwandung 123 nach außen strömt, ein anderer Teil in Richtung der Pfeile 134 am Düsenkörper 118 vorbei nach unten zurückströmt.

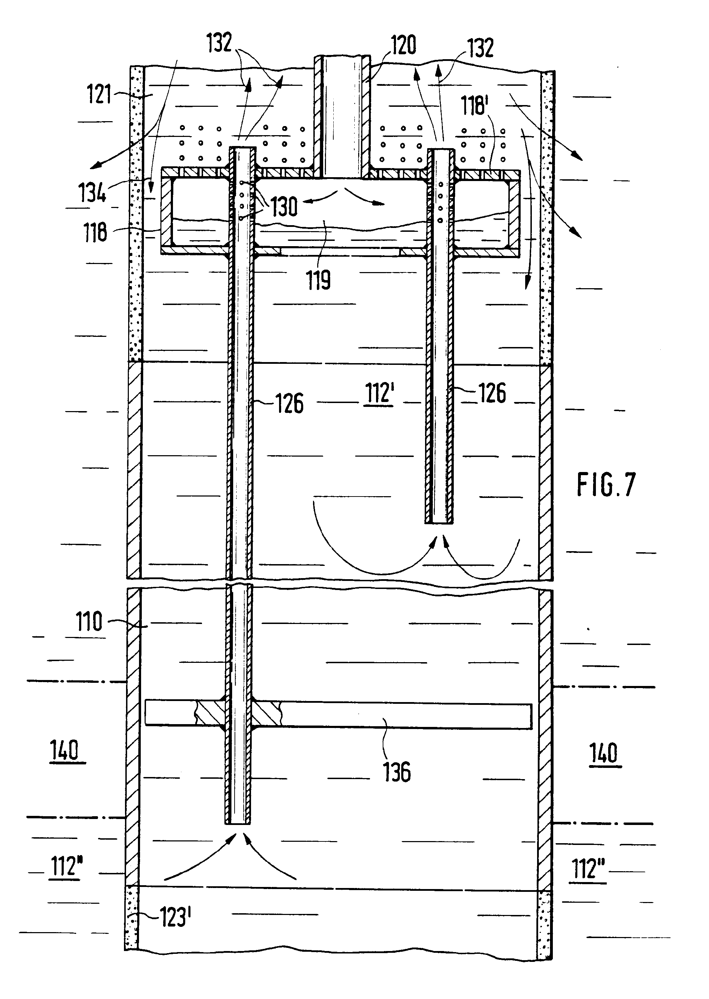

Fig. 7 zeigt eine Ausführungsform der Anordnung, bei welcher die Düsenrohre 126 mit unterschiedlicher Länge ausgebildet sind und an den längeren Düsenrohren, von denen nur eines dargestellt ist, eine den Brunnenschacht 110 abteilende Zwischenwandung 136 befestigt ist. Die Zwischenwandung 136 ist auf der Höhe einer wasserdichten Bodenschicht 140 angeordnet, unterhalb welcher sich gespanntes Grundwasser 112″ angesammelt hat, das durch einen unteren Filterwandungsbereich 123′ der Brunnenschachtauskleidung in den Brunnenschacht 110 drückt. Gewünschtenfalls kann dieses gespannte Grundwasser 112″ durch die Zwischenwandung 136 durchstoßende Düsenrohre 126 gezielt nach oben in den Reinigungsbereich 121 geleitet werden. Die langen und die Zwischenwandung 136 tragenden Düsenrohre 126 können an ihrem unteren Ende aber auch verschlossen und stattdessen oberhalb der Zwischenwandung 136 mit nicht dargestellten seitlichen Wassereintrittsöffnungen versehen sein, wenn gewünscht wird, daß nur Grundwasser 112′ aus dem oberhalb der Zwischenwandung 136 befindlichen Brunnenschachtbereich in den Reinigungsbereich 121 hochgefördert wird.

In mit den beschriebenen Anordnungen nach Fig. 6 und 7 versehenen Brunnenschächten wird also ein innerer Grundwasserumlauf durch den Reinigungsbereich 121 hindurch verstärkt und gleichzeitig eine vertikale Grundwasserbewegung in der Umgebung des Brunnenschachtes begünstigt. Anstelle einzelner Düsenrohre 126 können auch anders gestaltete Düsenschächte, etwa Düsenschächte, deren Querschnitt einem Hohlringsektor entspricht, vorgesehen sein.

## Patentansprüche

1. Anordnung zum Austreiben leichtflüchtiger Verunreinigungen aus dem Grundwasser und dem von ihm durchströmten Erdreich durch Erzeugung von Unterdruck in einem bis in den Bereich des verunreinigten Grundwassers getriebenen Brunnenschacht und Zuleitung eines Gases, insbesondere von Frischluft unterhalb des Wasserspiegels in den Brunnenschacht, dadurch gekennzeichnet, daß die Begrenzungswandung des Brunnenschachtes (10) mindestens in dem zwischen der Lufteingabestelle (19) und dem Wasserspiegel (13′) befindlichen Reinigungsbereich (21) des Brunnenschachtes mit feineren, eine laminare Flüssigkeitsströmung begünstigenden Kapillaröffnungen und einer größeren freien Durchlaßfläche als die übrige Brunnenschachtwandung (14) ausgebildet ist.

2. Anordnung nach Anspruch 1, dadurch gekennzeichnet, daß die Wandungsbewehrung des Brunnenschachtes (10) in dem luftdurchströmten Reinigungsbereich (21) zwischen Lufteingabestelle (19) und Wasserspiegel (13′) aus zwei konzentrisch und mit Abstand voneinander angeordneten Siebwandungen

<div align="center">5</div>

EP 0 328 993 B1

(24, 25) besteht, die durch Stützstege (27) und/oder Siebwandungsteile (28) gegeneinander abgestützt sind und deren Zwischenraum mit einem feine Kapillardurchgänge ergebenden Granulat (26) ausgefüllt ist.

3. Anordnung nach Anspruch 1 und 2, dadurch gekennzeichnet, daß die Wandungsbewehrung der anderen Brunnenschachtbereiche aus bekannten Brunnenrohren (14) mit Schlitzbrückenlochung (22) besteht.

4. Anordnung nach einem der Ansprüche 1 bis 3, dadurch gekennzeichnet, daß zur Verteilung der zugeleiteten Frischluft im Grundwasser (12') des Brunnenschachtes (10) eine Siebwandung (18) mit Abstand vom Wasserspiegel (13') angeordnet ist, die an einem Schwimmer verankert ist, an welchem außerdem das Ende einer schlauchbalgförmigen Folienwandung (32) befestigt ist, die bis zur Brunnenschachtöffnung (Deckel 15) reicht und ein Einsaugen von Gas aus dem den Brunnenschacht (10) umgebenden grundwasserfreien Bodenbereich (11) verhindert.

5. Anordnung nach einem der Ansprüche 1 bis 4, dadurch gekennzeichnet, daß die Begrenzungswandung des Brunnenschachtes (10) auch im Bodenbereich (Siebwandungsbereich 36) des Brunnenschachtes mit feineren, eine laminare Flüssigkeitsströmung relativ großer Geschwindigkeit begünstigenden Kapillaröffnungen und einer größeren freien Durchlaßfläche als die übrige Brunnenschachtwandung ausgebildet ist.

6. Anordnung nach Anspruch 5, dadurch gekennzeichnet, daß die übrige Brunnenschachtwandung (Rohre 37, 38) wasserundurchlässig gehalten ist.

7. Anordnung nach einem der Ansprüche 1 bis 6, dadurch gekennzeichnet, daß die Brunnenschachtwandung in ihrem unterhalb des Grundwasserspiegels (13) liegenden Bereich mit Heizkörpern (41) oder -flächen versehen ist.

8. Anordnung nach einem der Ansprüche 1 bis 7, dadurch gekennzeichnet, daß der Brunnenschacht (10) im grundwasserfreien Bereich mit doppelwandigen wasserundurchlässigen Rohren (38) ausgekleidet ist.

9. Anordnung nach einem der Ansprüche 1 bis 8, dadurch gekennzeichnet, daß am Düsenkörper (118) mindestens ein seine obere Begrenzungswandung (118') durchdringender und nach unten über die vom Düsenkörper (118) begrenzte Luftkammer (119) hinausragender Düsenschacht (126) angeordnet ist, der im Bereich der Luftkammer (119) mit Lufteintrittsöffnungen (130) in seiner Wandung versehen ist.

10. Anordnung nach Anspruch 9, dadurch gekennzeichnet, daß der Düsenschacht (126) aus einem Rohrabschnitt gebildet ist.

11. Anordnung nach Anspruch 9 oder 10, dadurch gekennzeichnet, daß der Düsenschacht (126) an seinem unteren Ende zum Ansetzen eines Verlängerungsschachtes (129) ausgebildet ist.

12. Anordnung nach einem der Ansprüche 9 bis 11, dadurch gekennzeichnet, daß der Düsenkörper (118) in seiner oberen gelochten Begrenzungswandung (118') eine zentrale Öffnung für den Anschluß der Frischluftzuleitung (120) und in gleichen Abständen davon und in gleichmäßiger Umfangsverteilung Öffnungen zur Aufnahme mehrerer rohrförmiger Düsenschächte (126) aufweist.

13. Anordnung nach einem der Ansprüche 9 bis 12, dadurch gekennzeichnet, daß mehrere Düsenschächte (126) mit unterschiedlicher Länge angeordnet sind, dergestalt, daß ihre unteren Enden unterschiedliche Abstände von dem Düsenkörper (118) haben.

14. Anordnung nach einem der Ansprüche 9 bis 13, dadurch gekennzeichnet, daß an mindestens einem der Düsenschächte (126) mindestens eine den Brunnenschacht (110) abteilende, quer zu dessen Längsrichtung mit Abstand vom Düsenkörper (118) verlaufende Zwischenwandung (136) befestigt ist, die von diesem Düsenschacht (126) durchdrungen ist.

15. Anordnung nach einem der Ansprüche 9 bis 14, dadurch gekennzeichnet, daß der Brunnenschacht mit einer Auskleidung versehen ist, die nur im Höhenbereich des Düsenkörpers (118) und in mindestens einem mit Abstand davon und tiefer gelegenen Bereich wasserdurchlässig gehalten ist (Filterrohre 123, 123').

16. Anordnung nach Anspruch 15, dadurch gekennzeichnet, daß ein tiefer gelegener wasserdurchlässiger Bereich (123') der Brunnenschachtauskleidung unterhalb einer Brunnenschacht-Zwischenwandung (136) vorgesehen ist.

## Claims

1. Arrangement for the expulsion of light volatile pollutants from ground water and the soil it flows through by producing negative pressure in a wellshaft which is driven into the area of the polluted ground water, and feeding a gas, in particular fresh air, to below the water level in the wellshaft, **characterised in that** the defining wall of the wellshaft (1Ø) is provided, at least in the cleaning region (21) of the wellshaft located between the air-inlet location (19) and the water level (13'), with finer capillary openings which encourage a laminar liquid flow, and a free passage surface which is larger than the remaining wellshaft wall (14).

2. Arrangement according to claim 1, **characterised in that** the wall reinforcement of the wellshaft (1Ø) in the cleaning region (21) with airflow between air-feed location (19) and water level (13') is composed of two sieve walls (24, 25), which are arranged concentrically and at a distance from each other and which are supported against each other by support webs (27) and/or sieve-wall portions (28), and the intermediate space of which is filled with a granulate (26) which establishes fine capillary passages.

3. Arrangement according to claim 1 and 2, **characterised in that** the wall reinforcement of the other wellshaft regions is composed of conventional well pipes (14) with slotted bridge perforation (22).

4. Arrangement according to one of claims 1 to 3, **characterised in that,** for the purpose of distributing fresh air entered in the ground water (12') of the wellshaft (1Ø), a sieve wall (18) is disposed at a distance from the water level (13') and anchored to a float, to which is also attached the end of a hose-bellows shaped foil wall (32), which extends up to the wellshaft opening (cover 15) and prevents gas to be drawn in from the ground-water-free ground area (11) around the wellshaft.

5. Arrangement according to one of claims 1 to 4, **characterised in that** the defining wall of the wellshaft (1Ø) is also fitted in the ground area (sieve-wall region 36) with finer capillary openings, which encourage a laminar flow of liquid at relatively high speed, and with a passage surface which is larger than the remaining wellshaft wall.

6. Arrangement according to claim 5, **characterised in that** the remaining wellshaft wall (pipes 37, 38) are kept watertight.

7. Arrangement according to one of claims 1 to 6, **characterised in that** the wellshaft wall is provided with heaters (41) or heating surfaces in the area below its ground-water level.

8. Arrangement according to one of claims 1 to 7, **characterised in that** the wellshaft (1Ø) is lined with doublewalled watertight pipes (38) in the ground-water-free area.

9. Arrangement according to one of claims 1 to 8, **characterised in that** on the nozzle body (118) is arranged at least one nozzle shaft, which penetrates its upper defining wall (118') and extends downward beyond the air chamber (119) defined by the nozzle body (118), and which is provided with air-intake openings (13Ø) in its wall in the region of the air chamber (119).

10. Arrangement according to claim 9, **characterised in that** a pipe section forms the nozzle shaft (126).

11. Arrangement according to claim 9 or 1Ø, **characterised in that** the nozzle shaft (126) is constructed for attachment of an extension shaft (129) to its lower end.

12. Arrangement according to one of claims 9 to 11, **characterised in that** the nozzle body (118) has in its upper perforated defining wall (118') a central opening for connection of the fresh-air supply (12Ø), and at even distances therefrom and at equal peripheral spacing openings for receiving a plurality of tubular nozzle shafts (126).

13. Arrangement according to one of claims 9 to 12, **characterised in that** a plurality of nozzle shafts (126) of different lengths are arranged so that their lower ends are at different distances from the nozzle body (118).

14. Arrangement according to one of claims 9 to 13, **characterised in that** at least one of the nozzle shafts (126) has attached to it an intermediate wall, which sections off the wellshaft (11Ø), extends transversely to its longitudinal direction at a distance from the nozzle body (118) and which is penetrated by this nozzle shaft (126).

15. Arrangement according to one of claims 9 to 14, **characterised in that** the wellshaft is provided with a lining which is kept water permeable only in a region at the level of the nozzle body (118) and in at least one region which is kept at a distance thereof and below (filter pipes 123, 123′).

16. Arrangement according to claim 15, **characterised in that** a lower water permeable region (123′) of the wellshaft lining is provided below an intermediate wall (136) of the wellshaft.


## Revendications

1. Dispositif pour chasser les souillures légèrement volatiles de la nappe souterraine et de la terre traversée par celle-ci par production d'une dépression dans un puits fonctionnant jusque dans la zone de la nappe souterraine souillée et l'introduction d'un gaz, en particulier de l'air frais au-dessous du niveau d'eau dans le puits, caractérisé en ce que la paroi de délimitation du puits (10) au moins dans la zone de nettoyage (21) du puits se trouvant entre la zone d'introduction de l'air (19) et le niveau d'eau (13′) est formée avec des ouvertures capillaires fines, favorisant un écoulement laminaire et une surface de passage libre plus grande que le reste de la paroi du puits (14).

2. Dispositif selon la revendication 1, caractérisé en ce que l'armature de la paroi du puits (10) est constituée dans la zone de nettoyage (21) traversée par l'air entre la zone d'introduction de l'air (19) et le niveau d'eau (13′) de deux parois à tamis (24, 25) concentriques disposées à distance l'une de l'autre, qui sont soutenues l'une contre l'autre par des entretoises de soutien (27) et/ou des parties de paroi à tamis (28) et dont l'intervalle est rempli par un granulat (26) donnant de fins passages capillaires.

3. Dispositif selon la revendication 1 ou 2, caractérisé en ce que l'armature de la paroi des autres zones du puits est constituée de tubes de puits (14) connus avec perforation en pont en fente (22).

4. Dispositif selon l'une des revendications 1 à 3, caractérisé en ce que pour la répartition de l'air frais introduit dans la nappe souterraine (12′) du puits (10) une paroi à tamis (18) est disposée à distance du niveau d'eau (13′), qui est ancrée à un flotteur, auquel est fixée en outre l'extrémité d'une paroi à feuille (32) en forme de tuyau flexible annelé, qui arrive jusqu'à l'ouverture du puits (couvercle 15) et empêche une aspiration de gaz hors de la zone du fond (11) exempte de nappe souterraine entourant le puits (10).

5. Dispositif selon l'une des revendications 1 à 4, caractérisé en ce que la paroi de délimitation du puits (10) est formée également dans la zone du fond (zone de la paroi à tamis 36) du puits d'ouvertures capillaires plus fines, favorisant un écoulement laminaire du liquide à une vitesse relativement importante et d'une surface de passage libre plus grande que le reste de la paroi du puits.

6. Dispositif selon la revendication 5, caractérisé en ce que le reste de la paroi du puits (tubes 37, 38) est maintenu imperméable à l'eau.

7. Dispositif selon l'une des revendications 1 à 6, caractérisé en ce que la paroi du puits est munie dans sa zone située au-dessous du niveau de la nappe souterraine (13) de corps ou de surfaces de chauffe (41).

8. Dispositif selon l'une des revendications 1 à 7, caractérisé en ce que le puits (10) est revêtu dans la zone exempte de nappe souterraine de tubes à double paroi imperméables à l'eau (38).

9. Dispositif selon l'une des revendications 1 à 8, caractérisé en ce que sur le corps de buse (118) est disposé au moins un puits de buse (126) traversant sa paroi de délimitation (118′) et dépassant vers le bas au-dessus de la chambre d'air (119) limitée par le corps de buse (118), qui est muni dans la zone de la chambre d'air (119) d'ouvertures d'entrée d'air (120) dans sa paroi.

10. Dispositif selon la revendication 9, caractérisé en ce que le puits de buse (126) est formé d'une section de tube.

11. Dispositif selon la revendication 9 ou 10, caractérisé en ce que le puits de buse (126) est conçu à son extrémité inférieure pour le raboutage d'un puits de prolongement (129).

12. Dispositif selon l'une des revendications 9 à 11, caractérisé en ce que le corps de buse (118) présente dans sa paroi de délimitation perforée supérieure (118') une ouverture centrale pour le raccordement de la conduite d'air frais (120) et à des distances identiques de celle-ci et selon une répartition périphérique des ouvertures pour loger plusieurs puits de buse (126) en forme de tube.

13. Dispositif selon l'une des revendications 9 à 12, caractérisé en ce que plusieurs puits de buse (126) de différente longueur sont disposés de telle façon que leurs extrémités inférieures ont des distances différentes par rapport au corps de buse (118).

14. Dispositif selon l'une des revendications 9 à 13, caractérisé en ce que sur un au moins des puits de buse (126) est fixée au moins une paroi intermédiaire (136) séparant le puits (110), située transversalement par rapport à la direction longitudinale de celui-ci à distance du corps de buse (118), qui est traversée par ce puits de buse (126).

15. Dispositif selon l'une des revendications 9 à 14, caractérisé en ce que le puits est muni d'un revêtement qui est maintenu perméable à l'eau seulement dans la zone à la hauteur du corps de buse (118) et dans au moins une zone à distance de celui-ci et située plus profondément (tubes filtres 123, 123').

16. Dispositif selon la revendication 15, caractérisé en ce qu'une zone (123') du revêtement du puits, perméable à l'eau, située plus profondément, est prévue au-dessous d'une paroi intermédiaire du puits (136).

FIG.1

FIG.2

FIG.3

FIG.4

FIG.5

FIG.6

FIG.7